# EUROPEAN PATENT SPECIFICATION

(11) **EP 3 276 152 B1**
(45) Date of publication and mention of the grant of the patent: **02.09.2020**
(21) Application number: 17183822.0
(22) Date of filing: 28.07.2017
(51) Int. Cl.: F02K 1/82, F02C 7/045, G10K 11/172

(54) **ENGINE HOUSING COMPRISING A LINER ASSEMBLY AND METHODS OF ASSEMBLING A LINER ASSEMBLY**
MOTORGEHÄUSE UND VERFAHREN ZUR MONTAGE EINER AUSKLEIDUNGSANORDNUNG
CARTER DE MOTEUR COMPRENANT UN ENSEMBLE DE REVÊTEMENT ET PROCÉDÉS D'ASSEMBLAGE D'UN ENSEMBLE DE REVÊTEMENT

(30) Priority: 28.07.2016 US 201615222330
(43) Date of publication of application: 31.01.2018
(73) Proprietor: The Boeing Company, Chicago, IL 60606-1596 (US)
(72) Inventor: FOLLET, Jesse Ian, Chicago, IL Illinois 60606-1596 (US); SHIVASHANKARA, Belur N., Chicago, IL Illinois 60606-1596 (US); VANDEMARK, Zachariah Beach, Chicago, IL Illinois 60606-1596 (US); HEBERT, Leonard J., Chicago, IL Illinois 60606-1596 (US)
(74) Representative: Howson, Richard Giles Bentham

(56) References cited:
- EP-A2- 2 017 826
- US-A- 3 820 628
- US-A1- 2004 148 891
- US-A1- 2010 301 161
- US-A1- 2015 315 972

## Description

### BACKGROUND

The field of the disclosure relates generally to a reduction liner for use with a turbofan engine, and, more particularly, to a drag-reducing liner assembly and methods of assembling the same.

At least some known engines, such as some known jet engines and turbofan jet engines, are surrounded by a generally barrel-shaped nacelle and a core casing that covers the core engine. Such engines, and the airflow moving therethrough, generate an undesired amount of noise. As such, at least some known engines include an acoustic liner mounted on exposed surfaces of the engine, nacelle, and housing to dampen the noise level. More specifically, such acoustic liners include a honeycomb core coupled to a facesheet including a plurality of holes defined therethrough. In at least some known acoustic liners, the holes are either circular or elongated in the direction of the airflow. Sound waves generated inside the engine propagate and enter the cells of the honeycomb core through the facesheet and reflect from a backsheet at a phase different from the entering sound waves to facilitate damping the incoming sound waves and attenuating the overall noise level.

However, the air flowing over the holes defined in the facesheet cause an undesired amount of surface drag, which can reduce the efficiency of the engine. Additionally, the cost and time required to form the amount of holes in the facesheet required to achieve the desired acoustic performance is extensive.

US2010301161 describes an acoustic lining for an aircraft, which can cover a leading edge, such as an air inlet in the nacelle of a propulsion unit, said lining comprising: (i) from the inside outwards, a reflective layer, at least one cellular structure and an acoustically resistive structure having a pre-determined proportion of open surface; and (ii) at least one frost treatment system in the form of at least one heating layer comprising open zones through which acoustic waves can pass, which co-operate at least partially with the open zones in the acoustically resistive structure. The invention is characterised in that the acoustically resistive structure includes at least one structural layer with openings and in that said at least one heating layer is disposed under the structural layer.

US2015315972 describes an acoustic liner that includes a first core that has a plurality of first core cells defined by a corresponding plurality of first core cell walls. The first core has a first core thickness. The acoustic liner also includes a second core that has a plurality of second core cells defined by a corresponding plurality of second core cell walls. The second core has a second core thickness, and the first core thickness and the second core thickness are unequal. The acoustic liner further includes a second fabric sheet coupled between the first core and the second core. Each of the plurality of second core cell walls generally is not coplanar with any of the plurality of first core cell walls.

US2004148891 describes a sound attenuation panel comprising a resistive layer with a reinforced structural component, comprising at least a honeycomb structure flanked, on one side, with a resistive layer consisting of at least a porous layer and of at least a perforated structural layer, and, on the other side, with a layer forming a total reflector. The invention is characterized in that said structural layer is perforated with non-circular holes having each its largest dimension and its smallest dimension along respectively two perpendicular axes. The invention is particularly applicable to pods for aeroplane jet engines.

EP2017826 describes an acoustic panel for a fan casing of a gas turbine engine includes one or more Helmholtz resonators to absorb acoustic energy propagated upstream from the fan. By arranging that the periodic air flow out of the resonators has some axial momentum, by inclining the passages that from the necks of the resonators in a downstream direction, some of the energy in this air flow can be realised as a useful pressure rise in the direction of the air flow into the fan, rather than a pressure drop as in known acoustic panels.

### BRIEF DESCRIPTION

According to the invention, there is provided an engine housing according to claim 1 and a method of assembling a liner assembly according to claim 10.

### BRIEF DESCRIPTION OF THE DRAWINGS

FIG. 1 is a schematic cross-sectional view of an embodiment of an engine assembly including an engine housing;
FIG. 2 is an exploded perspective view of an exemplary liner assembly that may be used with the engine housing shown in FIG. 1;
FIG. 3 is a cross-sectional view of the liner assembly shown in FIG. 2;
FIG. 4 is an exploded side view of the liner assembly shown in FIG. 2 illustrating an exemplary facesheet, a septum, and a core;
FIG. 5 is top view of the facesheet shown in FIG. 4 illustrating a plurality of slots defined therethrough; and
FIG. 6 is a flowchart of an embodiment of a method of assembling the liner assembly shown in FIG. 2.

### DETAILED DESCRIPTION

The implementations described herein provide an apparatus and method for noise attenuation and drag reduction in an engine housing. The implementations describe a liner assembly that includes a core, a septum coupled to the core, and a facesheet coupled to the septum. The facesheet includes a plurality of slots defined therethrough. Each slot is elongated in a direction perpendicular to the direction of an airflow that is configured to travel over the facesheet. Furthermore, the septum is coupled to a top surface of the core such that the septum and the facesheet are in direct contact with one another. The embodiments described herein provide improvements over at least some known noise attenuation systems for engine housings. As compared to at least some known noise attenuation systems, the embodiments described herein facilitate reducing the drag induced by the slots during operation. More specifically, as described above, estimates and experimental testing have shown that orienting the slots in a direction perpendicular to the airflow direction can reduce drag. Furthermore, combining the perpendicular orientation of the slots with the position of the septum being directly adjacent the facesheet can further reduce the drag to unexpected levels comparable to that of a smooth facesheet having no slots or holes.

In embodiments of the invention described below, the slot width (minor axis) should be small for the concept to work. A range of 0.001" (0.0254 mm) to 0.25" (6.35 mm) is envisaged for the slot width. The slot length (major axis) will scale with application, stress, and layout concept. This length could be as long as the circumference of an engine inlet barrel (over 414" (10.5 m) on an engine the size of the GE9X). This could be achieved using a "strip" manufacturing approach. A range of 0.1" (2.54 mm) to 5" (127 mm) is, however, envisaged for the slot length in many embodiments, including those that follow. Alternative slot dimensions that are also envisaged are also given in the more detailed description of embodiments that follows.

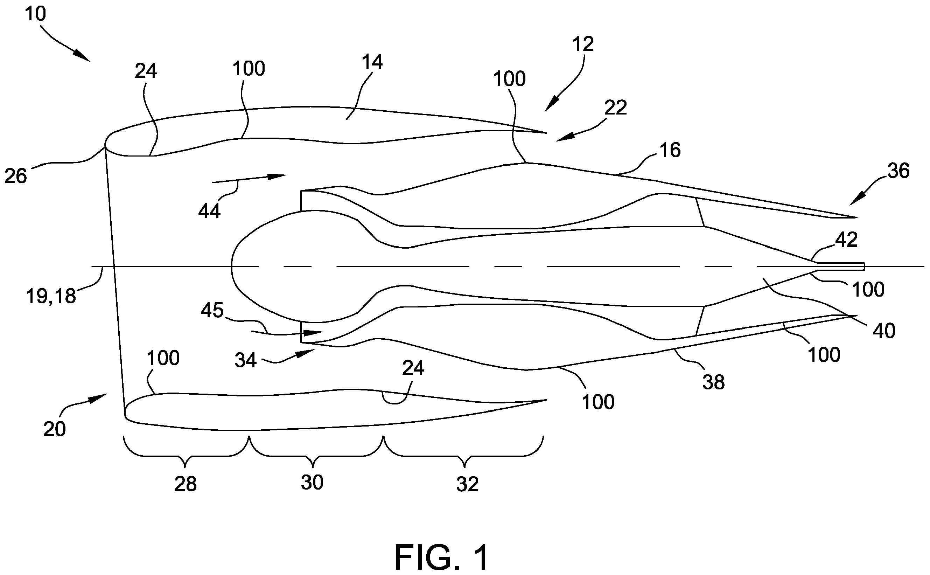

Referring more particularly to the drawings, implementations of the disclosure may be described in the context of an engine assembly 10 shown schematically in cross-section in FIG. 1. The engine assembly 10 can be used with an aircraft engine. In an embodiment, engine assembly 10 includes a housing 12 including a nacelle 14 and a core casing 16. Nacelle 14 and core casing 16 enclose a turbofan engine for use with an aircraft.

In the illustrated implementation, nacelle 14 and core casing 16 extend generally circumferentially about a centerline 18. Nacelle 14 includes a forward end 20, an aft end 22, and an inner surface 24 extending between ends 20 and 22. Nacelle 14 also includes, in a sequential forward to aft arrangement, a lip portion 26, an inlet portion 28, a fan case portion 30, and a fan duct portion 32. Inner surface 24 extends axially along each of lip portion 26, inlet portion 28, fan case portion 30, and fan duct portion 32. Similarly, core casing 16 includes a forward end 34, an aft end 36, and an outer surface 38 extending between ends 34 and 36. Core casing 16 also includes a nozzle portion 40 including an outer surface 42.

In the implementation, engine housing 12 includes a liner assembly 100 coupled to at least one of inner surface 24 of nacelle 14, outer surface 38 of core casing 16, and outer surface 42 of nozzle portion 40. During operation, liner assembly 100 is exposed to an airflow 44 traveling through housing 12 in the axial direction, that is, along an axis 19, which is parallel to centerline 18. As described herein, liner assembly 100 can both attenuate noise generated by engine assembly 10 and also reduce drag created by airflow 44 along inner surface 24 and outer surface 38 and by an airflow 45 through core casing 16 and along outer surface 42. In one implementation, liner assembly 100 is coupled along an entire length of inner surface 24 between ends 20 and 22 of nacelle 14 and is also coupled along an entire length of at least one of outer surface 38 between ends 34 and 36 of core casing 16. In another implementation, liner assembly 100 is coupled to only a portion of at least one of inner surface 24 and outer surface 38. Generally, liner assembly 100 extends along at least one of inner surface 24 and outer surface 38 any length required to achieve the desired noise attenuation and drag reduction.

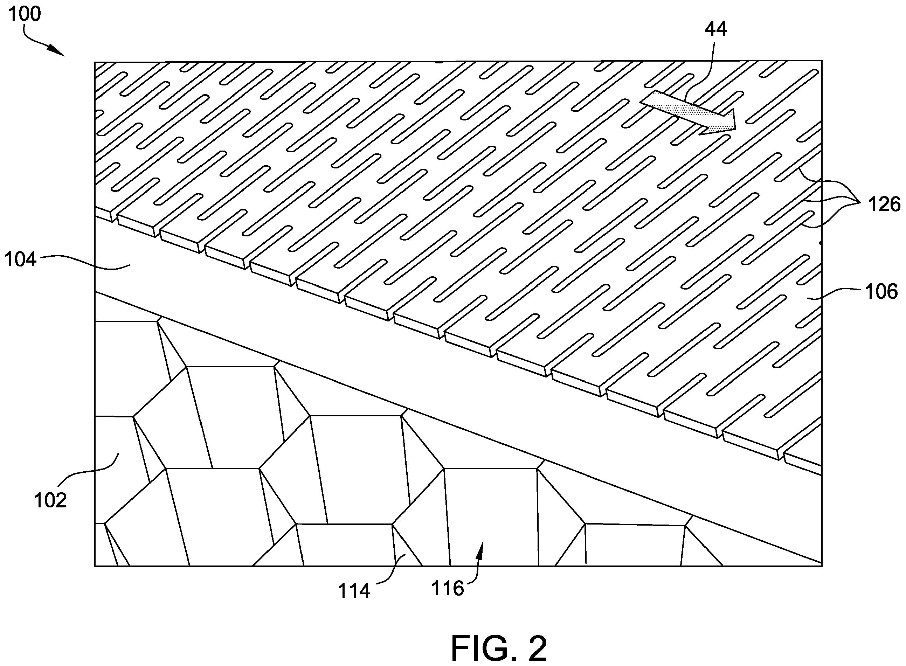

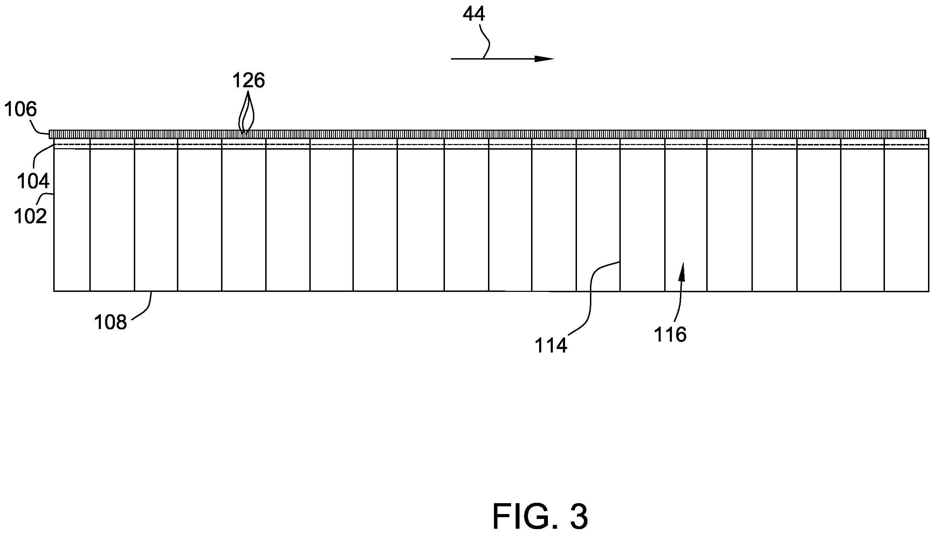

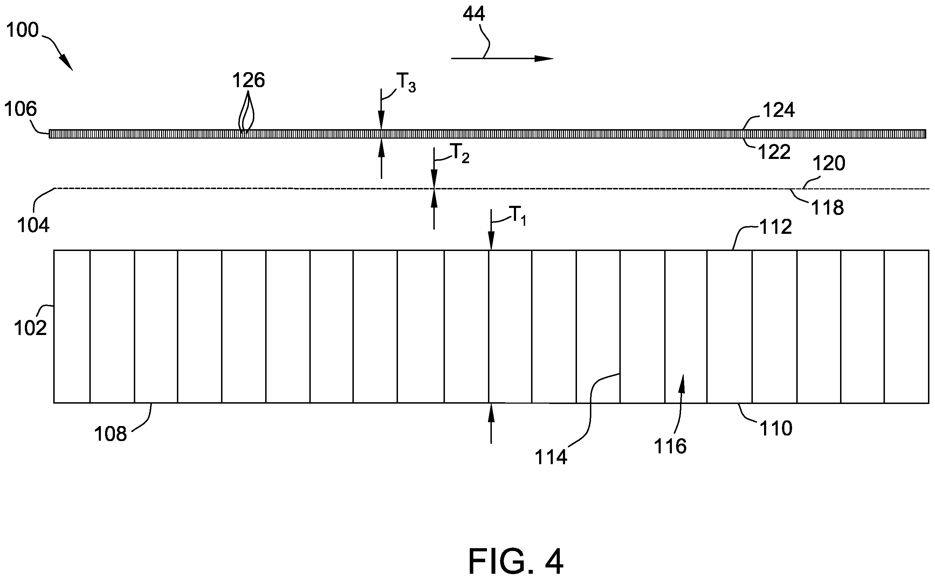

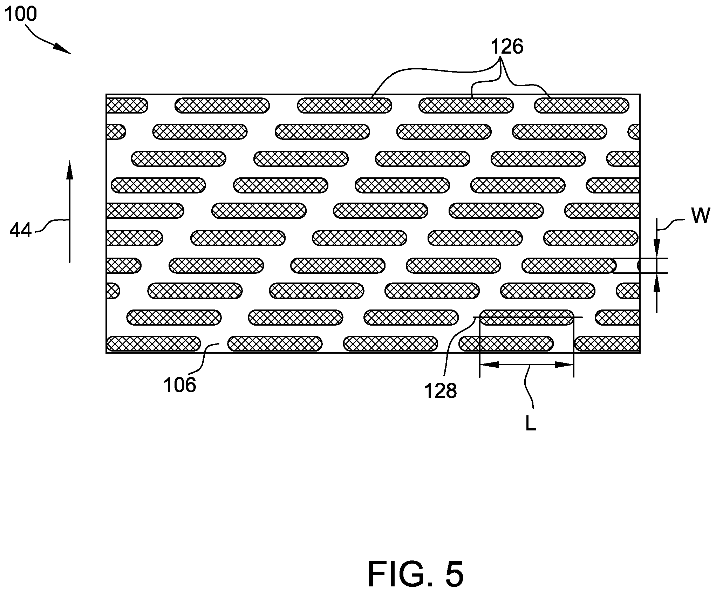

FIG. 2 is an exploded perspective view of liner assembly 100 that is used with engine housing 12 (shown in FIG. 1). FIG. 3 is a cross-sectional view of liner assembly 100. FIG. 4 is an exploded side view of liner assembly 100, and FIG. 5 is top view of liner assembly 100.

Liner assembly 100 includes a core 102, a septum 104, and a facesheet 106 coupled to one another. Core 102 is coupled to at least one of inner surface 24 (shown in FIG. 1) and outer surface 38 (shown in FIG. 1), and facesheet 106 is exposed to airflows 44 and 45 when engine assembly 10 (shown in FIG. 1) is in an operational state. Liner assembly 100 also includes a backsheet 108 coupled to core 102 opposite facesheet 106. Backsheet 108 provides a cap to the individual cells of core 102 to facilitate noise attenuation. Backsheet 108, core 102, septum 104, and facesheet 106 are coupled together using diffusion bonding. Backsheet 108, core 102, septum 104, and facesheet 106 may be brazed or welded together, or in another implementation, may be coupled together using an adhesive. Generally, backsheet 108, core 102, septum 104, and facesheet 106 may be coupled together in any suitable fashion that enables liner assembly 100 to function as described herein.

As shown in FIGS. 2-5, core 102 includes a first surface 110 and an opposing second surface 112 having cell openings defined therethrough. First surface 110 is coupled to backsheet 108 and second surface 112 is coupled to septum 104. In one implementation, backsheet 108 closes first surface 110 such that first surface 110 is impermeable to air and, therefore, acoustic flow.

Furthermore, core 102 includes a plurality of cells 114 extending between surfaces 110 and 112 and arranged in a honeycomb pattern wherein each cell 114 has a generally hexagonal cross-section and includes a channel 116 defined therethrough. Generally, cells 114 may be shaped and arranged in any suitable pattern that enables core 102 to function as described herein. In the exemplary implementation, core cells 114 are full-depth cells, that is, cells 114 are continuous through core 102 between surfaces 110 and 112.

In one implementation, core 102 includes a thickness T1 in a range of 0.1 inches (in.) (2.54 millimeters (mm)) to 4.0 inches (101.6 mm). Generally, core 102 may have any thickness that facilitates operation of liner assembly 100 as described herein. More specifically, the thickness T1 of core 102 may be tuned to provide optimum noise attenuation for various jet engine and nacelle configurations. More specifically, the thickness T1 of core 102 may be based on the location of liner assembly 100 within engine assembly 10. Additionally, core 102 is formed from fiberglass-reinforced phenolic resin. In alternative embodiments, core 102 is formed from another fiber-reinforced resin. In still other alternative embodiments, core 102 is formed from at least one of a plastic material, a metal, a coated paper material, or any other suitable material that enables core 102 to function as described herein.

In the exemplary implementation, septum 104 includes a first surface 118 and an opposing second surface 120. Septum first surface 118 is coupled to second surface 112 of core 102, and septum second surface 120 is coupled to facesheet 106. As such, septum 104 is coupled between core 102 and facesheet 106 such that core 102 does not contact facesheet 106 and septum 104 is directly coupled to facesheet 106. In another implementation, septum 104 covers only the open areas of facesheet 106 such that facesheet 106 is directly coupled to core 102. In the illustrated implementation, septum 104 is coupled to core 102 using an adhesive. In certain implementations, the adhesive is a reticulated film adhesive to facilitate avoiding interference with the acoustic coupling of cells 114 and septum 104. In other implementations, septum 104 is coupled to core 102 in any suitable fashion that enables liner assembly 100 to function as described herein.

Septum 104 is formed at least partially from a material that provides substantially linear acoustic attenuation. In certain implementations, septum 104 is formed from a woven fabric, such as a fabric woven from thermoplastic fibers in the polyaryletherketone (PAEK) family. In an implementation, septum 104 is formed from at least one of a polyetherketoneketone (PEKK) and a polyether ether ketone (PEEK) woven fabric. As used herein, the term "linear material" is meant to describe any material that responds substantially the same to acoustic waves regardless of the sound pressure (i.e., amplitude) of the waves, to facilitate noise attenuation. With a linear material, the pores or passages defined therein may be configured such that resistance to pressure waves does not vary with the noise level, and the pressure drop across the material is relatively constant with respect to the pressure wave velocity. This is a result of the pressure losses primarily due to viscous or friction losses through the material.

Additionally, in certain implementations, septum 104 has a thickness T2 in a range of 0.001 inches (0.0254 mm) to 0.200 inches (5.08 mm). In another implementation, the thickness T2 is a range of 0.003 inches (0.0762 mm) to 0.100 inches (2.54 mm). In an embodiment, septum 104 has a thickness T2 of 0.005 inches. In alternative implementations, septum 104 is formed from any suitable material and has any suitable thickness that enables septum 104 to function as described herein.

Liner assembly 100 includes facesheet 106 including a first surface 122 and an opposing second surface 124. Facesheet first surface 122 is coupled to second surface 120 of septum 104, and facesheet second surface 124 is exposed to axially-oriented airflow 44. As best shown in FIG. 5, facesheet 106 includes a plurality of slots 126 extending therethrough from first surface 122 to second surface 124. Each slot 126 includes a major axis 128 that is oriented perpendicular to the direction of airflow 44. That is, each slot 126 is elongated such that each slot 126 defines a length L in a direction perpendicular to the direction of airflow 44 over facesheet 106. In an implementation, slots 126 include a length in a range of approximately 0.250 inches to approximately 1.500 inches. In one implementation, slots include a length in a range of 0.250 inches (6.35 mm) to 1.500 inches (38.1 mm). As such, as liner assembly 100 extends circumferentially along inner surface 24 (shown in FIG. 1) of nacelle 14 (shown in FIG. 1) and/or outer surface 38 (shown in FIG. 1) of core casing 16 (shown in FIG. 1), slots 126 are oriented circumferentially with respect to centerline 18 (shown in FIG. 1). In the exemplary implementation, each slot 126 also defines a width W extending in the direction of airflow 44. More specifically, each slot 126 defines a width of approximately 0.005 inches (0.127 mm) to approximately 0.06 inches (1.524 mm). In one embodiment, each slot defines a width of 0.005 inches (0.127 mm) to 0.06 inches (1.524 mm). In another implementation, the width W of each slot 126 is a maximum of 0.06 inches (1.524 mm). In alternative implementations, length L and width W will have dimensions that scale with application and flow conditions.

As shown in FIG. 5, slots 126 are elongated in a direction perpendicular to centerline 18 and, thus, the direction of airflow 44. Such a perpendicular orientation facilitates minimizing drag created by slots 126 for a certain open area. More specifically, experimental testing has shown that orienting slots 126 in a direction perpendicular to the direction of airflow 44 can reduce drag. Furthermore, combining the perpendicular orientation of slots 126 with the position of septum 104 being directly adjacent facesheet 106 can further reduce the drag to levels below that as would be expected according to estimates. Such experimental drag levels are comparable to that of a facesheet having no slots. Tests have shown that the smaller the width W of slots 126 oriented a direction perpendicular to centerline 18 (and the direction of airflow 44), the lower the measured drag levels.

In one implementation, slots 126 are spaced on facesheet 106 such that facesheet 106 has a porosity in a range of between 5 percent open area (POA) to 40 POA, and more specifically, between 15 POA to 30 POA. In an embodiment, slots 126 are spaced such that facesheet 106 has a porosity of 20 POA. The relatively high porosity of facesheet 106 reduces the pressure loss through slots 126. Accordingly, the pressure within core 102 is approximately equal to the pressure along second surface 124 of facesheet 106, and slots 126 do not significantly affect the flow of air into and out of core 102 as sound waves pass over surface of facesheet 106. In some implementations, the percent open area of facesheet 106 is based on a percent open area of septum 104 such that facesheet 106 and septum 104 generate a predetermined combined flow resistance. For example, in implementations where septum 104 has a low percentage open area, facesheet 106 will have a high percent open area such that the combined flow resistance of facesheet 106 and septum 104 is within a predetermined range. Moreover, in the illustrated embodiment, slots 126 are disposed in a staggered pattern such that they alternate in axial position along a circumference of facesheet 106. In alternative embodiments, slots 126 may be disposed in any suitable pattern that enables facesheet 106 to function as described herein. For example, the slots 126 may be disposed in a non-staggered pattern.

Facesheet 106 is made of a metallic material, such as, but not limited to, titanium, aluminum, or any other metallic material. Additionally, in another implementation, facesheet 106 is made of composite, resin, wood, or any material that holds stress and facilitates operation of liner assembly 100 as described herein. Furthermore, facesheet 106 includes a thickness T3 in a range of between 0.01 inches (0.254 mm) to 0.25 inches (6.35 mm) and, in certain implementations, in a range between 0.05 inches (1.27 mm) and 0.1 inches (2.54 mm). Generally, facesheet 106 may have any thickness T3 that facilitates operation of liner assembly 100 as described herein.

In at least some embodiments, a shape and spacing of slots 126 on facesheet 106 facilitate an increased linearity of, and acoustic attenuation by, liner assembly 100, as compared to at least some known perforated facesheets. Additionally, alignment of slots 126 perpendicular to centerline 18 (and the direction of airflow 44) facilitates minimizing drag created by slots 126. The shape and spacing of slots 126 also facilitates a decreased cost and time required to manufacture facesheet 106. For example, in a particular embodiment, facesheet 106 is used as part of nacelle 14 (shown in FIG. 1) for a turbofan engine, and facesheet 106 includes about 96,000 slots 126, wherein millions of perforations are required for a conventional facesheet in a similar application.

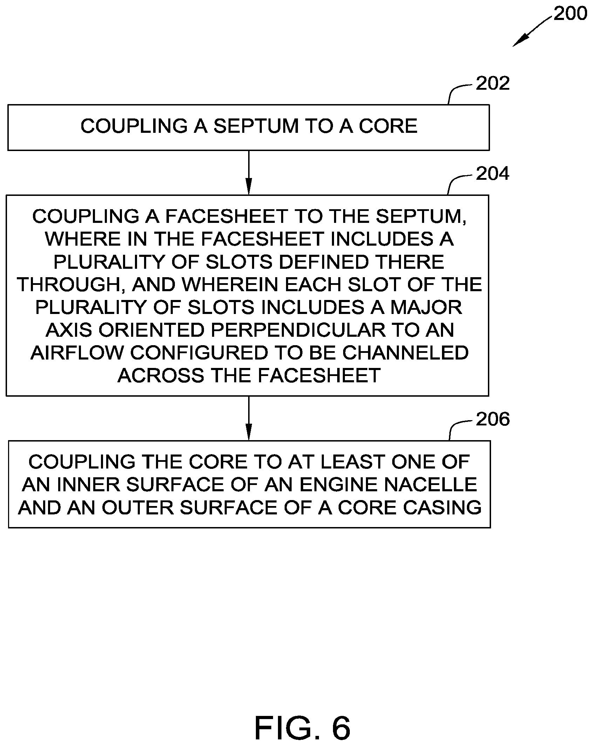

FIG. 6 is a flowchart of an embodiment of a method 200 of assembling a liner assembly, such as liner assembly 100. Method 200 includes coupling 202 a septum, such as septum 104, to a core, such as core 102, and then coupling 204 a facesheet, such as facesheet 106, to the septum. The facesheet includes a plurality of slots, such as slots 126, defined therethrough that each includes a major axis oriented perpendicular to a centerline, such as centerline 18, and thus perpendicular to an airflow, such as airflow 44, configured to be channeled across the facesheet. Method 200 further includes coupling 206 the core to at least one of an inner surface of an engine nacelle, such as inner surface 24 of nacelle 14, and an outer surface of a core casing, such as outer surface 38 of core casing 16.

Each of the processes of method 200 may be performed or carried out by a system integrator, a third party, and/or a customer. For the purposes of this description, a system integrator may include without limitation any number of aircraft manufacturers and major-system subcontractors; a third party may include without limitation any number of venders, subcontractors, and suppliers; and a customer may be an airline, leasing company, military entity, service organization, and so on.

The embodiments described herein provide an apparatus and method for noise attenuation and drag reduction in an engine housing. The embodiments describe a liner assembly that includes a core, a septum coupled to the core, and a facesheet coupled to the septum. The facesheet includes a plurality of slots defined therethrough. Each slot is elongated in a direction perpendicular to the direction of an airflow that is configured to travel over the facesheet. Furthermore, the septum is coupled to a top surface of the core such that the facesheet and the core do not contact one another. The embodiments described herein provide improvements over at least some known noise attenuation systems for engine housings. As compared to at least some known noise attenuation systems, the embodiments described herein facilitate reducing the drag induced by the slots during operation. More specifically, as described above, experimental testing has shown that orienting the slots in a direction perpendicular to the airflow direction reduces drag. Furthermore, combining the perpendicular orientation of the slots with the position of the septum being directly adjacent the facesheet further reduces the drag to unexpected levels comparable to that of a facesheet having no slots.

This written description uses examples to disclose various implementations, which include the best mode, to enable any person skilled in the art to practice those implementations, including making and using any devices or systems and performing any incorporated methods. The patentable scope is defined by the claims, and may include other examples that occur to those skilled in the art.

## Claims

1. An engine housing (12) having a centerline (18) and an axis extending through the engine housing parallel to the centerline (18) , said engine housing comprising:
a nacelle (14) comprising an inner surface (24);
a core casing (16) comprising an outer surface (38), wherein said inner surface and said outer surface are configured to be exposed to an airflow (44) traveling in a direction generally parallel to the axis (19); and
a liner assembly (100) coupled to at least one of said inner surface and said outer surface; the liner assembly comprising:
a core (102);
a septum (104) coupled to said core; and
a facesheet (106) coupled to said septum, said facesheet comprising a plurality of slots (126) defined therethrough, wherein each slot of said plurality of slots comprises a major axis oriented perpendicular to the centerline.

2. The engine housing in accordance with Claim 1, wherein said septum (104) is coupled between said core (102) and said facesheet (106).

3. The engine housing (12) in accordance with Claim 2, wherein said core (102) comprises a first surface (110) and a second surface (112), and said septum (104) comprises a first surface (118) and a second surface (120), wherein the septum first surface (118) is coupled to said core second surface (112).

4. The engine housing (12) in accordance with Claim 2 or 3, wherein said septum (104) is coupled between said core (102) and said facesheet (106) such that said core does not contact said facesheet.

5. The engine housing (12) in accordance with any one of Claims 1 to 4, wherein said plurality of slots (126) define a width of approximately 0.005 inches (0.0127 cm) to approximately 0.06 inches (0.1524 cm).

6. The engine housing (12) in accordance with any one of Claims 1 to 5, wherein said plurality of slots (126) include a maximum width of 0.06 inches (0.1524 cm).

7. The engine housing (12) in accordance with any one of Claims 1 to 6, wherein said facesheet (106) has a porosity in a range of between approximately 5 percent to approximately 40 percent open area.

8. The engine housing (12) in accordance with any one of claims 1 to 7, wherein said plurality of slots (126) are oriented circumferentially with respect to the centerline (18).

9. The engine housing (12) in accordance with any one of claims 1 to 7, wherein said facesheet (106) is coupled to an entirety of at least one of said inner surface (24) and said outer surface (38), or wherein said facesheet (106) is coupled to only a portion of at least one of said inner surface and said outer surface.

10. A method (200) of assembling a liner assembly (100), said method comprising:
coupling (202) a septum (104) to a core (102); and
coupling (204) a facesheet (106) to the septum, wherein the facesheet includes a plurality of slots (126) defined therethrough, and wherein each slot of the plurality of slots includes a major axis (128) oriented perpendicular to a centerline (18) of the liner assembly; coupling (206) the core (102) to at least one of an inner surface (24) of an engine nacelle (14) or an outer surface (38) of a core casing (16), wherein said inner surface and said outer surface are configured to be exposed to an airflow (44) traveling in a direction generally parallel to the centerline.

11. The method (200) in accordance with claim 10, wherein the core (102) includes a first surface (110) and a second surface (112) and the septum (104) includes a first surface (118) and a second surface (120), and wherein coupling (202) the septum (104) to the core (102) comprises coupling the first surface (118) of the septum to the second surface (120) of the core.

12. The method (200) in accordance with any one of Claims 10 or 11, wherein coupling (204) the facesheet (106) to the septum (104) comprises coupling the facesheet to the septum such that the facesheet does not contact the core (102).

13. The method in accordance with any one of Claims 10 to 12, wherein coupling the facesheet to the septum comprises coupling the facesheet including a plurality of slots that each include a width between 0.005 inches (0.0127 cm) and 0.06 inches (0.1524 cm).

## Patentansprüche

1. Triebwerksgehäuse (12), das eine Mittellinie (18) und eine Achse hat, die sich durch das Triebwerksgehäuse parallel zu der Mittellinie (18) erstreckt, wobei das Triebwerksgehäuse aufweist:
eine Triebwerksgondel (14), die eine innere Oberfläche (24) aufweist;
ein Kerngehäuse (16), das eine äußere Oberfläche (38) aufweist, wobei die innere Oberfläche und die äußere Oberfläche dazu konfiguriert sind, einem Luftstrom (44) ausgesetzt zu werden, der in einer Richtung im Allgemeinen parallel zu der Achse (19) wandert; und
eine Auskleidungsanordnung (100), die mit wenigstens einer der inneren Oberfläche und der äußeren Oberfläche verbunden ist, wobei die Auskleidungsanordnung aufweist:
einen Kern (102);
eine Trennwand (104), die mit dem Kern verbunden ist; und
eine Deckschicht (106), die mit der Trennwand verbunden ist, wobei die Deckschicht eine Vielzahl von Schlitzen (126) aufweist, die dort hindurch ausgebildet sind, wobei jeder Schlitz der Vielzahl von Schlitzen eine Hauptachse aufweist, die senkrecht zu der Mittellinie ausgerichtet ist.

2. Triebwerksgehäuse nach Anspruch 1, wobei die Trennwand (104) zwischen den Kern (102) und die Deckschicht (106) gekoppelt ist.

3. Triebwerksgehäuse (12) nach Anspruch 2, wobei der Kern (102) eine erste Oberfläche (110) und eine zweite Oberfläche (112) aufweist, und wobei die Trennwand (104) eine erste Oberfläche (118) und eine zweite Oberfläche (120) aufweist, wobei die erste Oberfläche (118) der Trennwand mit der zweiten Oberfläche (112) des Kerns verbunden ist.

4. Triebwerksgehäuse (12) nach Anspruch 2 oder 3, wobei die Trennwand (104) derart zwischen den Kern (102) und die Deckschicht (106) gekoppelt ist, dass der Kern die Deckschicht nicht berührt.

5. Triebwerksgehäuse (12) nach einem der Ansprüche 1 bis 4, wobei die Vielzahl von Schlitzen (126) eine Breite von ca. 0,0127 cm (0,005 Inch) bis ca. 0,1524 cm (0,06 Inch) definieren.

6. Triebwerksgehäuse (12) nach einem der Ansprüche 1 bis 5, wobei die Vielzahl von Schlitzen (126) eine maximale Breite von 0,1524 cm (0,06 Inch) aufweisen.

7. Triebwerksgehäuse (12) nach einem der Ansprüche 1 bis 6, wobei die Deckschicht (106) eine Porosität in einer Größenordnung von zwischen ca. 5 Prozent bis ca. 40 Prozent offenem Bereich hat.

8. Triebwerksgehäuse (12) nach einem der Ansprüche 1 bis 7, wobei die Vielzahl von Schlitzen (126) umlaufend bezüglich der Mittellinie (18) ausgerichtet sind.

9. Triebwerksgehäuse (12) nach einem der Ansprüche 1 bis 7, wobei die Deckschicht (106) mit der Gesamtheit von wenigstens einer der inneren Oberfläche (24) und der äußeren Oberfläche (38) verbunden ist, oder wobei die Deckschicht (106) nur mit einem Teil von wenigstens einer der inneren Oberfläche und der äußeren Oberfläche verbunden ist.

10. Verfahren (200) zum Zusammensetzen einer Auskleidungsanordnung (100), wobei das Verfahren aufweist:
Verbinden (202) einer Trennwand (104) mit einem Kern (102); und
Verbinden (204) einer Deckschicht (106) mit der Trennwand, wobei die Deckschicht eine Vielzahl von Schlitzen (126) aufweist, die dort hindurch ausgebildet sind, und wobei jeder Schlitz der Vielzahl von Schlitzen eine Hauptachse (128) aufweist, die senkrecht zu einer Mittellinie (18) der Auskleidungsanordnung ausgerichtet ist;
Verbinden (206) des Kerns (102) mit wenigstens einem von einer inneren Oberfläche (24) einer Triebwerksgondel (14) oder einer äußeren Oberfläche (38) eines Kerngehäuses (16), wobei die innere Oberfläche und die äußere Oberfläche dazu konfiguriert sind, einem Luftstrom (44) ausgesetzt zu werden, der in einer Richtung im Allgemeinen parallel zu der Mittellinie wandert.

11. Verfahren (200) nach Anspruch 10, wobei der Kern (102) eine erste Oberfläche (110) und eine zweite Oberfläche (112) aufweist und die Trennwand (104) eine erste Oberfläche (118) und eine zweite Oberfläche (120) aufweist, und wobei das Verbinden (202) der Trennwand (104) mit dem Kern (102) das Verbinden der ersten Oberfläche (118) der Trennwand mit der zweiten Oberfläche (120) des Kerns aufweist.

12. Verfahren nach einem der Ansprüche 10 oder 11, wobei das Verbinden (204) der Deckschicht (106) mit der Trennwand (104) das Verbinden der Deckschicht mit der Trennwand derart aufweist, dass die Deckschicht den Kern (102) nicht berührt.

13. Verfahren nach einem der Ansprüche 10 bis 12, wobei das Verbinden der Deckschicht mit der Trennwand das Verbinden der Deckschicht aufweist, die eine Vielzahl von Schlitzen aufweist, welche jeweils eine Breite zwischen 0,0127 cm (0,005 Inch) und 0,1524 cm (0,06 Inch) haben.

## Revendications

1. Carter de moteur (12) présentant un axe central (18) et un axe s'étendant à travers le carter de moteur parallèlement à l'axe central (18),
ledit carter de moteur comprenant :
une nacelle (14) comprenant une surface intérieure (24) ;
une enveloppe de noyau (16) comprenant une surface extérieure (38), dans lequel ladite surface intérieure et ladite surface extérieure sont configurées pour être exposées à un écoulement d'air (44) se déplaçant dans une direction globalement parallèle à l'axe (19) ; et
un assemblage formant chemise (100) couplé à au moins une surface parmi ladite surface intérieure et ladite surface extérieure ;
l'assemblage formant chemise comprenant :
un noyau (102) ;
un septum (104) couplé audit noyau ; et
une semelle (106) couplée audit septum, ladite semelle comprenant une pluralité de fentes (126) définies à travers celle-ci, dans lequel chaque fente de ladite pluralité de fentes comprend un axe principal orienté perpendiculairement à l'axe central.

2. Carter de moteur selon la revendication 1, dans lequel ledit septum (104) est couplé audit noyau (102) et à ladite semelle (106).

3. Carter de moteur (12) selon la revendication 2, dans lequel ledit noyau (102) comprend une première surface (110) et une seconde surface (112), et ledit septum (104) comprend une première surface (118) et une seconde surface (120), dans lequel la première surface de septum (118) est couplée à ladite seconde surface de noyau (112).

4. Carter de moteur (12) selon la revendication 2 ou 3, dans lequel ledit septum (104) est couplé entre ledit noyau (102) et ladite semelle (106) de telle sorte que ledit noyau n'entre pas en contact avec ladite semelle.

5. Carter de moteur (12) selon une quelconque des revendications 1 à 4, dans lequel ladite pluralité de fentes (126) définissent une largeur d'environ 0,0127 cm (0,005 pouces) à environ 0,1524 cm (0,06 pouces).

6. Carter de moteur (12) selon une quelconque des revendications 1 à 5, dans lequel ladite pluralité de fentes (126) comprennent une largeur maximale de 0,1524 cm (0,06 pouces).

7. Carter de moteur (12) selon une quelconque des revendications 1 à 6, dans lequel ladite semelle (106) a une porosité comprise dans une plage entre environ 5 pour cent et environ 40 pour cent de zone ouverte.

8. Carter de moteur (12) selon une quelconque des revendications 1 à 7, dans lequel ladite pluralité de fentes (126) sont orientées circonférentiellement par rapport à l'axe central (18).

9. Carter de moteur (12) selon une quelconque des revendications 1 à 7, dans lequel ladite semelle (106) est couplée à la totalité d'au moins une surface parmi ladite surface intérieure (24) et ladite surface extérieure (38), ou dans lequel ladite semelle (106) est couplée à seulement une partie d'au moins une surface parmi ladite surface intérieure et ladite surface extérieure.

10. Procédé (200) destiné à assembler un assemblage formant chemise (100), ledit procédé comprenant les étapes consistant à :
coupler (202) un septum (104) à un noyau (102) ; et
coupler (204) une semelle (106) au septum, dans lequel la semelle comporte une pluralité de fentes (126) définies à travers celle-ci, et dans lequel chaque fente de la pluralité de fentes comporte un axe principal (128) orienté perpendiculairement à un axe central (18) de l'assemblage formant chemise ;
coupler (206) le noyau (102) à au moins une surface parmi une surface intérieure (24) d'une nacelle de moteur (14) ou une surface extérieure (38) d'une enveloppe de noyau (16), dans lequel ladite surface intérieure et ladite surface extérieure sont configurées pour être exposées à un écoulement d'air (44) se déplaçant dans une direction globalement parallèle à l'axe central.

11. Procédé (200) selon la revendication 10, dans lequel le noyau (102) comporte une première surface (110) et une seconde surface (112) et le septum (104) comporte une première surface (118) et une seconde surface (120), et dans lequel le couplage (202) du septum (104) au noyau (102) comprend l'étape consistant à coupler la première surface (118) du septum à la seconde surface (120) du noyau.

12. Procédé (200) selon une quelconque des revendications 10 ou 11, dans lequel le couplage (204) de la semelle (106) au septum (104) comprend l'étape consistant à coupler la semelle au septum de telle sorte que la semelle n'entre pas en contact avec le noyau (102).

13. Procédé (200) selon une quelconque des revendications 10 à 12, dans lequel le couplage de la semelle au septum comprend l'étape consistant à coupler la semelle comportant une pluralité de fentes qui comportent chacune une largeur entre 0,0127 cm (0,005 pouces) et 0,1524 cm (0,06 pouces).
